# EUROPÄISCHE PATENTANMELDUNG

(11) **EP 0 882 548 A2**
(43) Veröffentlichungstag der Anmeldung: **09.12.1998**
(21) Anmeldenummer: 98110005.0
(22) Anmeldetag: 02.06.1998
(51) Int. Cl.: B23Q 37/00, B23Q 1/26, B23Q 39/02, B23Q 41/00

(54) **CNC Dreh- und Fräsbearbeitungszentrum**

(30) Priorität: 06.06.1997 DE 19723702
(71) Anmelder: NILES-SIMMONS Industrieanlagen GmbH, D-09117 Chemnitz (DE)
(72) Erfinder: Naumann, Hans J., 41849 Wassenberg (DE); Tunkel, Franz, 35394 Giessen (DE); Mohr, Edgar, 35447 Reiskirchen -Ettingshausen (DE); Robotta, Reinhard, 09306 Erlau (DE)

(57) **Zusammenfassung**

Bekannte CNC-Dreh- und Fräsbearbeitungszentren arbeiten überwiegend mit werkzeugbestückten Schlitten zur Ausführung universeller Bearbeitungsaufgaben.

Mit der Entwicklung spezieller koppelbarer Bearbeitungsaggregate für eine CNC-Schrägbettmaschine sollen insbesondere die leistungsintensive und komplexe Bearbeitung weiterer Werkstückfamilien in Komplettbearbeitungstechnik ermöglicht werden. Die Bearbeitungsaggregate werden nach dem Baukastenprinzip angeordnet.

Durch die Erweiterung der Technologien kann ein leistungsintensives Drehen, Fräsen und Schleifen an Komplettbearbeitungsmaschinen erfolgen.

Das modulare CNC-Dreh-Fräs-Bearbeitungszentrum eignet sich für die Bearbeitung großer, rotationssymmetrischer Werkstücke.

## Beschreibung

Die Erfindung betrifft ein CNC-Dreh- und Fräsbearbeitungszentrum zur Komplettbearbeitung.

Die vorliegende Erfindung soll neben der Drehbearbeitung insbesondere die Bearbeitung von rotationssymmetrischen Werkstücken mit nutenförmigen Aussparungen als auch die Bearbeitung von exzentrischen Werkstückflächen ermöglichen. In der Fertigungspraxis hat sich gezeigt, daß rotationssymmetrische Werkstücke teilweise einen hohen Anteil Fräsbearbeitung aufweisen. Die Bearbeitung derartiger Werkstücke erfolgte bisher getrennt auf speziell eingerichteten Fräsmaschinen sowie mit den an CNC-Drehmaschinen vorhandenen Zusatzeinrichtungen oder eingerichteten angetriebenen Werkzeugen in Werkzeugträgern. Aus der Patentliteratur sind ferner Bearbeitungszentren für die Bearbeitung großer Serien für ausgewählte Werkstücke mit Werkzeugtürmen bekannt, mit denen verschiedene Werkzeuge oder komplette Bearbeitungseinheiten für die jeweilige Bearbeitungsaufgabe eingewechselt, eingeschwenkt und in den Achsen X, Y und B positioniert werden können. Die gewählten Lösungen sind auch für universelle Bearpeitungsaufgaben geeignet.

Andererseits sind die in Werkzeugträgem eingesetzten angetriebenen Fräswerkzeuge nur für niedrige Zerspanungsleistungen einsetzbar. Integrierte Fräseinheiten bedingen Steifigkeitsverlust, erfordern entsprechenden Raumbedarf und schränken den Einsatz größerer Fräswerkzeuge ein. Werkzeugspannköpfe für die Aufnahme von rotierenden und festen Werkzeugen sind ebenfalls in ihrer Leistungsfähigkeit begrenzt. Eine bekannte Lösung, indem auf einem Schlitten je ein Werkzeugträger für die Dreh- und Fräsbearbeitung eingesetzt wird, besitzt eine Frässpindelachse, die senkrecht auf Z die Aufnahme von Fräswerkzeugen ermöglicht. Dabei ist vordergründig die achssenkrechte Anordnung der Fräswerkzeuge vorgesehen. Die genannten Einrichtungen sind nicht zur Aufnahme von sehr hohen Schnittkräften beim Drehen und Fräsen und zur effektiven Bearbeitung spezieller Werkstückflächen geeignet. Der Erfindung liegt die Aufgabe zugrunde, die genannten Nachteile zu beseitigen und ein Bearbeitungszentrum der bekannten Art so zu verbessern, daß durch weitere Komponenten ein Baukastensystem zur Komplettbearbeitung und damit insbesondere eine leistungsintensive Fräsbearbeitung an Werkstücken mit größeren Fräsbearbeitungsanteilen an unterschiedlichen Werkstückflächen erfolgen kann.

Erfindungsgemäß wird die Aufgabe durch die kennzeichnenden Merkmale der Ansprüche 1 gelöst. Dabei wird mit einer Dreh- und Fräseinheit auf einem ersten Querschlitten an einem Werkstück z. B. die Dreh- Fräs- und oder Bohrbearbeitung und mittels einer speziellen Fräseinheit auf dem zweiten Querschlitten das Fräsen von vorzugsweise Längsnuten durchgeführt, so daß eine Komplettbearbeitung eines Werkstückes in Kombination durchgeführt werden kann. Die Fräseinheit auf dem zweiten Querschlitten kann unabhängig von der ersten Bearbeitungseinheit so ausgelegt werden, daß die Bedingungen für das Fräsen unter optimalen Kraftflußbedingungen geschaffen werden. Dabei sind durch die angeordnete Y-Achse auch außermittige Nuten einbringbar. Der senkrecht zur Werkstückachse eingestellte scheibenförmige Außenfräser ermöglicht durch den relativ großen Werkzeugdurchmesser gegenüber bisher für die Nutbearbeitung eingesetzten Schaftfräsern eine kompaktere Spindellagerung und Krafteinleitung über den gemeinsamen Längsschlitten und damit sehr hohe Genauigkeiten sowie hohe Zerspanungsleistungen. Diese Anordnung kann mit der Ausführung einer Frässpindel auf einer Waagerechtfräsmaschine nahezu verglichen werden. Der Vorschubantrieb erfolgt über die Vorschubachse Z des Längsschlittens. Die Wirkrichtung der Hauptschnittkratt erfolgt vorzugsweise in Richtung der Drehspindel, d. h. in Z-Richtung.

Ein CNC-Bearbeitungszentrum besitzt üblicherweise eine C-Achse zur Werkstückpositionietung, so daß in Verbindung mit der Y-Achse auch außermittige Flächen bearbeitet werden können. Durch die Trennung und oder Kopplung der Bearbeitungseinheiten wird auch die wahlweise Bearbeitung mit speziellen Werkzeugen möglich. Es kann weitestgehend behinderungsfrei und kollosionsfrei an Werkstücken jeweils die Bearbeitung durchgeführt werden. Es können vor allem große Fräswerkzeuge auf dem zweiten Querschlitten Verwendung finden. Weiterhin ermöglicht die Maschinensteuetung die Steuerung der Bearbeitungseinheiten entsprechend den technologischen Anforderungen. Die auf diese Weise erzielten Vorteile, liegen in der weiteren Verkürzung der Bearbeitungszeiten. Es werden in Baukastenform Komponenten zur Komplettbeabeitung und damit ein neues Maschinenkonzept vorgeschlagen. Eine bevorzugte Ausführungsform der Erfindung wird mit einer speziellen Nutenfräseinheit vorgesehen.

Vorteilhaft kann z. B. ein Scheibenfräser zur Werkstückbearbeitung mit Längsnuten eingesetzt werden. Eine Anwendungsmöglichkeit hierfür besteht bei der Bearbeitung von Druckwalzen.

In weiterer Ausgestaltung sollen zusätzlich auf getrennten Längsschlitten und separaten Antrieben Bearbeitungsaggregate für die gleichzeitige Bearbeitung angeordnet werden. Eine weitere Ausgestaltung besteht in der Anordnung der Werkzeugspindel für die Anwendung der Wirbeltechnik für kleinere Losgrößen zur Bearbeitung von Kurbel- und Nockenwellen. In weiterer Ausgestaltung kann zur Feinbearbeitung von Werkstücken wahlweise eine Schleifeinheit aufgenommen werden. Weitere vorteilhafte Ausführungsformen und Weiterbildungen der Erfindung sind in Unteransprüchen angegeben.

Die Werkzeuge für die überwiegend genannten Bearbeitungseinheiten können automatisch mittels Wechsler oder Greifer in die Werkzeugaufnahmen eingesetzt werden.

Eine weitere Variationsmöglichkeit besteht in der vorzugsweise vorgeschlagenen Ausführung für die schwere Zerspanung hinsichtlich Drehen und Fräsen.

Mit der vorgeschlagenen Lösung wird ein Baukastensystem mit Kombinationsmöglichkeiten für die CNC-Dreh-, Bohr-, Schleif-, und Fräsbearbeitung entsprechend der technologischen Forderungen zur Reduzierung der Hauptzeiten für die jeweilige Werkstückbearbeitung geschaffen.

Die Erfindung soll anhand der beigefügten Zeichnungen an Ausfühtungsbeispielen erläutert werden.

Es zeigen:
- Fig. 1: Bearbeitungszentrum mit zwei Bearbeitungseinheiten
- Fig. 2: Bearbeitungszentrum mit zwei Bearbeitungseinheiten sowie scheibenförmigen Außenfräser
- Fig. 3: Bearbeitungszentrum mit zwei Bearbeitungseinheiten koppelbar
- Fig. 4: Bearbeitungszentrum mit einer Fräs- und Schleifeinheit
- Fig. 5: Bearbeitungszentrum mit drei Bearbeitungseinheiten

### Bezugszeichenliste

- 1: Bett
- 2: Spindelkasten
- 3: Reitstock
- 4: Führungen
- 5: Querschlitten, erster
- 6: Querschlitten, zweiter
- 6.1: Querschlitten, dritter
- 7: Dreh- und Fräseinheit
- 8: Fräseinheit
- 9: X1-Achse
- 10: X2-Achse
- 10.1: X3-Achse
- 11: Y-Achse
- 12: Y2-Achse
- 13: B-Achse
- 14: Längsschlitten
- 14.1: Längsschlitten - Drehfräseinheit
- 15: Längsschlitten, zweiter
- 16: Längsschlitten, dritter
- 17: Dreheinheit
- 18: Schleifscheibe
- 19: Werkzeugaufnahme, rotierendes Werkzeug
- 20: Werkzeugaufnahme, feststehendes Werkzeug
- 21: Werkzeugspindelachse (Scheibenfräser)
- 22: Scheibenfräser
- 23: spezielle Fräseinheit
- 24: B2-Achse
- 25: Außen-/Innenwirbelgerät
- 26: Dreh- und Frässchlitten
- 27: Z-Achse

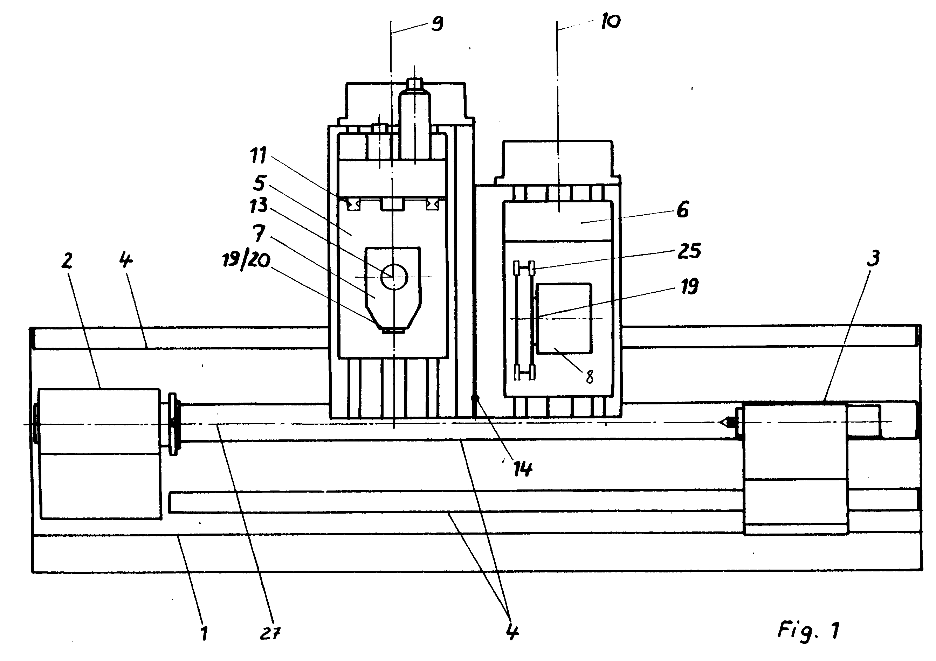

Die Fig. 1 zeigt eine zum Bearbeitungszentrum ausgebaute Drehmaschine, die ein Maschinenbett (1), einen Spindelkasten (2), Schlittenführungen (4), auf dem ein Längsschlitten (14) verfahrbar ist, beinhaltet. Nicht dargestellt sind die Werkstückaufnahme und das Werkstück, das zwischen Spindelkasten (2) und Reitstock (3) aufgenommen wird. Auf einem Querschlitten (5) ist eine Dreh- und Fräseinheit (7) in den Achsen (9, 11 und 13) verschiebbar sowie schwenkbar. Parallel zu dieser Bearbeitungseinheit ist auf einem zweiten Querschlitten (6) eine Fräseinheit (23) mit einem zur Werkstückachse parallel und zur X2-Achse (10) im rechten Winkel angeordneten scheibenförmigen Fräswerkzeug, das positionierbar ist, angeordnet. Das Fräsaggregat kann auch z. B. ein Wirbelaggregat sein.

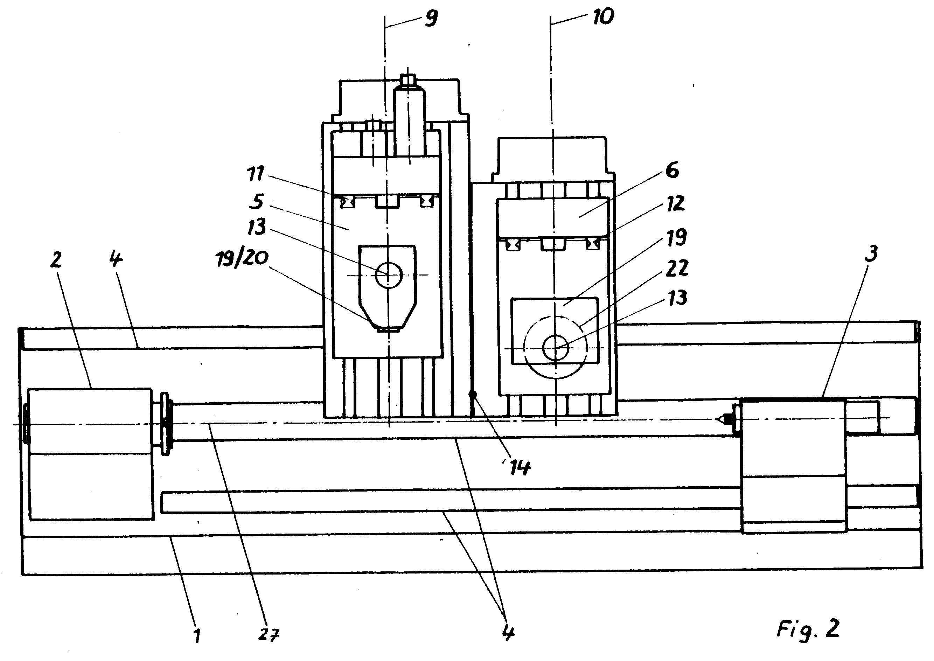

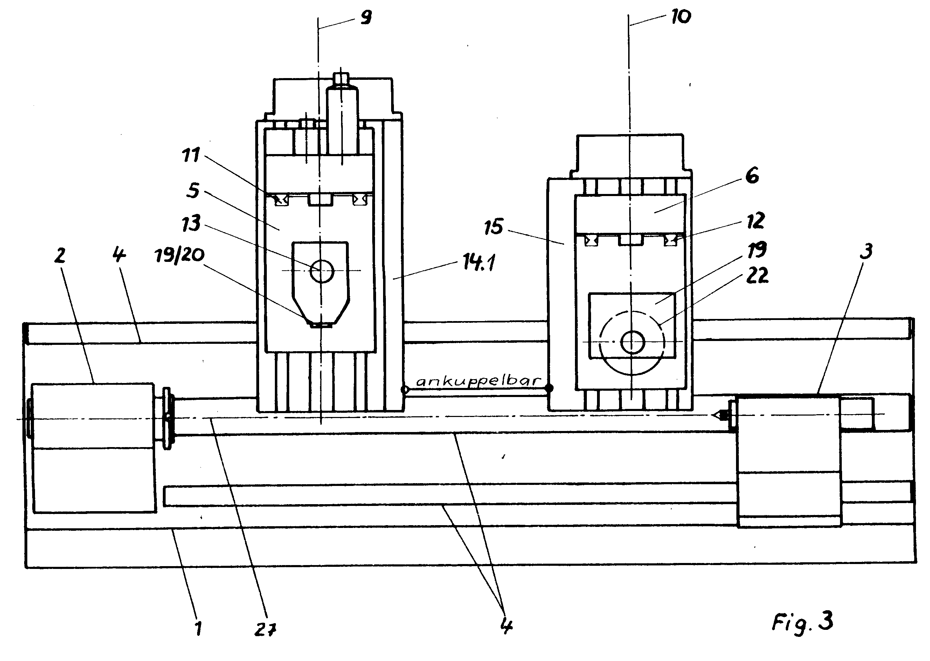

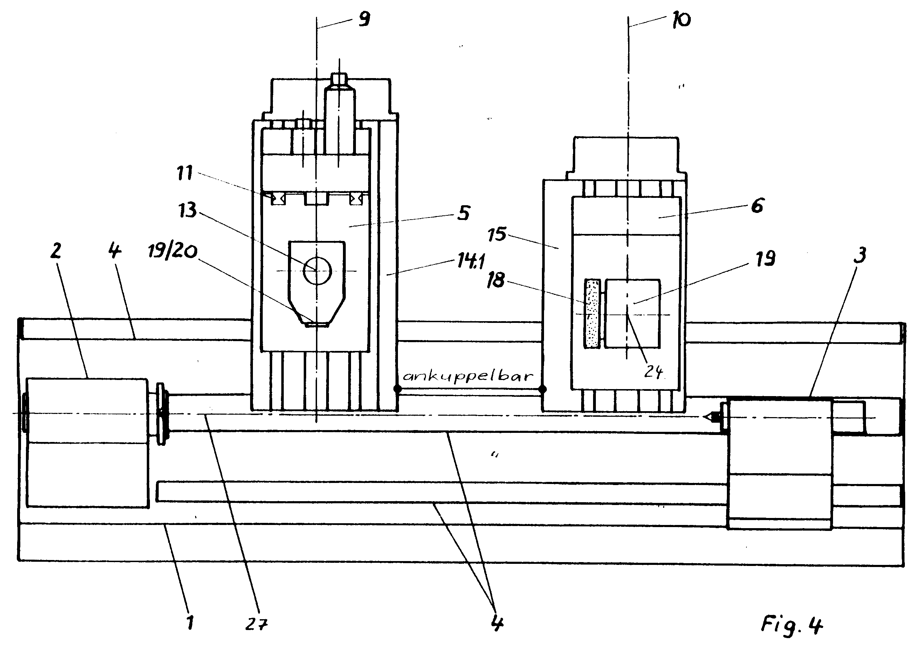

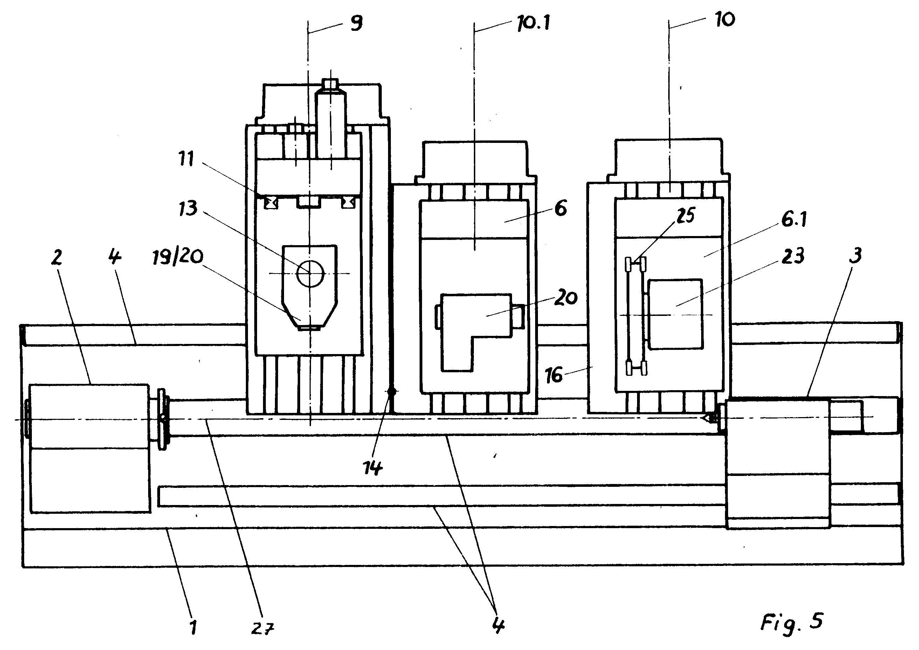

In Fig. 2 ist die Ausrüstung des zweiten Querschlittens (6) auf einem gemeinsamen Längsschlitten (14) mit einem speziellen Fräsaggregat (19) und parallel zur Werkstückachse ausgerichteten Scheibenfräser dargestellt. Der Scheibenfräser ist verfahrbar in X2 und Y2, so daß eine außermittige Bearbeitung durchgeführt werden kann und nutenförmige Aussparungen in Richtung der Werkstückachse mit hoher Schnittleistung hergestellt werden können. Weiter ist in Fig. 3 die in Fig. 2 beschriebene Fräs-Bearbeitungseinheit mittels jeweils eigenen Längsschlitten (14.1 und 15) mit der Möglichkeit einer Kopplung dargestellt. Fig. 4 zeigt die gleiche Ausführung der Längs- und Querschlitten (5) wie in Fig. 3 beschrieben, jedoch mit einer auf dem zweiten Querschlitten (6) angeordnete Schleifeinheit (19). In Fig. 5 ist zusätzlich zu einer Ausführung eines Längsschlittens (14) mit zwei Bearbeitungseinheiten ein weiterer Längsschlitten (16) koppelbar oder mit eigenem Antrieb sowie mit einem dritten Querschlitten (6.1) und einer speziellen Fräseinheit (23) mit einem Wirbelgerät (25) vorgesehen. Auf dem zweiten Querschlitten (6) ist eine spezielle Dreheinheit angeordnet.

## Patentansprüche

1. Ein CNC-Dreh- und Fräsbearbeitungszentrum mit einem parallel zum Spindelkasten und Reitstock verfahrbaren Längsschlitten, der in Z-Richtung verschiebbar ist, auf dem zwei Querschlitten nebeneinander und je für sich verstellbar und verschiebbar sind, mit einem Werkzeugträger für feste Werkzeuge und einem Werkzeugträger für rotierende Werkzeuge, wobei der Werkzeugträger für rotierende Werkzeuge in X und Y verschiebbar und um die B-Achse schwenkbar ist, ist dadurch gekennzeichnet, daß
- an einem ersten Querschlitten (5) auf einem Längsschlitten (14) eine universelle Drehfräseinheit (7) mit wahlweise einsetzbaren Dreh-, Bohr- oder Fräswerkzeugen (19, 20), verfahrbar in den Achsen X;Y und in B schwenkbar
- ein zweiter Querschlitten (6) auf einem Längsschlitten (14) eine Fräseinheit (22) verfahrbar und festlegbar, wenigstens in den Achsen X2;Y2, mit einer Werkzeugaufnahme für Umfangsfräswerkzeuge, deren Werkzeugspindel, mit eigenem Antrieb, rechtwinklig zur Hauptvorschubachse Z und parallel zur Y-Achse
- der erste und zweite Querschlitten (5, 6) mit Bearbeitungseinheiten (7, 8) je auf einem Längsschlitten (14.1, 15) und die Längsschlitten miteinander koppelbar und jeweils gemeinsam oder einzeln durch Mitnahmeeinrichtungen mit der Hauptvorschubachse Z verbindbar und verfahrbar angeordnet sind.

2. Bearbeitungszentrum nach Anspruch 1 dadurch gekennzeichnet, daß die Fräseinheit auf dem zweiten Querschlitten (6) einen scheibenförmigen Außenfräser (22), parallel zur Z-Achse, mit einer Rotationsachse um B, zur Bearbeitung von Längsnuten aufweist.

3. Bearbeitungszentrum nach Anspruch 1 dadurch gekennzeichnet, daß mindestens ein Längsschlitten (14.1, 15, 16) zusätzliche Antriebseinrichtungen für den Vorschub in Z-Richtung aufweist.

4. Bearbeitungszentrum nach Anspruch 1 dadurch gekennzeichnet, daß auf einem zweiten Querschlitten (6) ein Außen- oder Innenwirbelgerät (25) verschiebbar in X, Y angeordnet ist.

5. Bearbeitungszentrum nach Anspruch 1 und 3 dadurch gekennzeichnet, daß auf einem zweiten Querschlitten (6) eine Schleifeinheit (18) angeordnet ist.

6. Bearbeitungszentrum nach Anspruch 1 und 5 dadurch gekennzeichnet, daß die Fräseinheit und die Werkzeugaufnahmen (19) Fräswerkzeuge achsparallel und/oder achssenkrecht zur Werkstückachse angeordnet, aufnehmen.

7. Bearbeitungszentrum nach Anspruch 1 dadurch gekennzeichnet, daß wenigstens eine Drehfräseinheit und/oder eine Dreheinheit oder eine Fräseinheit und/oder eine Schleifeinheit angeordnet ist.

8. Bearbeitungszentrum nach Anspruch 1 dadurch gekennzeichnet, daß auf einem Längsschlitten (14) ein erster Querschlitten (5) mit einer Dreh- und Fräseinheit (7), ein zweiter Querschlitten (6) mit einer Dreheinheit (8) und ein weiterer Längsschlitten (16) auf dem ein Querschlitten (6.1) mit einer Fräseinheit (25), angeordnet ist.

9. Bearbeitungszentrum nach Anspruch 1 und 6 dadurch gekennzeichnet, daß die Werkzeugaufnahmen gleich gestaltet und für automatischen Wechsel der Werkzeuge angeordnet sind.
